# EUROPÄISCHE PATENTSCHRIFT

(11) **EP 1 302 687 B1**
(45) Veröffentlichungstag und Bekanntmachung des Hinweises auf die Patenterteilung: **08.11.2006**
(21) Anmeldenummer: 02020532.4
(22) Anmeldetag: 16.09.2002
(51) Int. Cl.: F16D 21/06, F16F 15/121

(54) **Mehrfach-Kupplungsanordnung**
Multiple clutch device
Dispositif à embrayages multiples

(30) Priorität: 09.10.2001 DE 10149706; 12.07.2002 DE 10231513; 05.09.2002 DE 10241027
(43) Veröffentlichungstag der Anmeldung: 16.04.2003
(73) Patentinhaber: ZF Sachs AG, 97424 Schweinfurt (DE)
(72) Erfinder: Carlson, Cora, 97456 Hambach (DE); Weth, Jürgen, Dipl.-Ing. (FH), 97464 Niederwerm (DE); Kister, Igor, Dipl.-Ing. (FH)., 97080 Würzburg (DE); Peinemann, Bernd, Dipl.Ing., 97464 Niederwerm (DE); Feldhaus, Reinhard, Dipl.-Ing., 97464 Niederwerm (DE); Bach, Hartmut, Dipl.-Ing., 97422 Schweinfurt (DE)

(56) Entgegenhaltungen:
- EP-A- 0 931 951
- DE-A- 4 314 856
- DE-A- 10 013 576
- DE-A- 10 033 436
- DE-A- 10 033 649
- DE-C- 19 953 091
- US-A- 5 593 015

## Beschreibung

Die vorliegende Erfindung betrifft eine Mehrfach-Kupplungsanordnung, insbesondere Kraftfahrzeug-Doppelkupplung, entsprechend dem Oberbegriff des Anspruchs 1.

Aus der EP 0 185 176 A1 ist eine derartige als Doppelkupplung aufgebaute Mehrfach-Kupplungsanordnung bekannt, bei welcher die beiden Kupplungsbereiche in Richtung der Drehachse des Gesamtsystems aufeinander folgend angeordnet sind. Eine Gehäuseanordnung ist an einem axialen Endbereich der Doppelkupplung zur Ankopplung an eine Antriebswelle ausgebildet, während von der anderen axialen Seite der Doppelkupplung her die Betätigung durch zwei voneinander unabhängig aktivierbare Ausrückersysteme erfolgt.

Weiterhin ist aus der EP 0 931 951 A1 eine Kupplungsanordnung bekannt, welche vom Aufbau entsprechend der vorgenannten EP 0 185 176 A1 aufgebaut ist. Der hier eingebrachte Torsionsschwingungsdämpfer wird über ein plattenartiges Eingangsteil mit der Kurbelwelle verbunden und dessen Ausgangsteil bildet zumindest teilweise eine Reibflläche der einen Kupplungsanordnung.

Derartige Doppelkupplungen werden häufig in Verbindung mit sehr drehmomentenstarken Antriebsaggregaten und in Verbindung mit sogenannten Lastschaltgetrieben eingesetzt. Diese Art von Antriebsaggregaten, beispielsweise direkt einspritzende Dieselmotoren, weisen in verschiedenen Drehzahlbereichen sehr starke Drehmomentschwingungsanregungen auf, die, wenn sie nicht gedämpft werden, auf den folgenden Bereich des Antriebsstrangs übertragen werden und neben einer erheblichen Belastung der verschiedenen Komponenten eines Antriebsstrangs zu einem unangenehmen Fahrgefühl führen.

Es ist die Aufgabe der vorliegenden Erfindung, eine Mehrfach-Kupplunganordnung, insbesondere Kraftfahrzeug-Doppelkupplung, bereitzustellen, bei welcher die durch übermäßige Schwingungsanregungen entstehenden Nachteile zumindest gemindert sind und der axiale Bauraumbedarf optimal ausgenutzt werden kann.

Gemäß der vorliegenden Erfindung wird vorgeschlagen, dass wenigstens eine der Widerlageranordnungen einen Teil der Torsivnsschwingungsdämpfer anordnung bildet. So ist vorgesehen, dass die Torsionsschwingungsdämpferanordnung ein Zentralscheibenelement und an beiden Seiten davon jeweils ein Deckscheibenelement umfasst, wobei die Deckscheibenelemente miteinander fest verbunden sind und mit dem Zentralscheibenelement über eine Dämpferelementenanordnung zur Drehmomentübertragung gekoppelt sind, und wobei wenigstens eines der Deckscheibenelemente wenigstens einen Teil der Widerlageranordnung von einem der Kupplungsbereiche bildet.

Durch das Zuordnen einer Torsionsschwingungsdämpferanordnung zu wenigstens einem der Kupplungsbereiche kann dafür gesorgt werden, dass insbesondere in den hinsichtlich der Schwingungsanregung kritischen Drehzahlbereichen eine Dämpfungsfunktion bereitgestellt ist. Des Weiteren sorgt die erfindungsgemäße Ausgestaltung, bei welcher verschiedene Systembereiche der Kupplungsbereiche einerseits und der Torsionsschwingungsdämpferanordnung andererseits in Achsrichtung einander überlappend positioniert sind, für eine kompakte Bauweise. Dies ist insbesondere bei Doppelkupplungen oder Mehrfach-Kupplungsanordnungen von Bedeutung, da bei diesen Vorrichtungen bereits mehrere Kupplungsbereiche in Achsrichtung aufeinander folgend angeordnet sind und somit vergleichsweise viel Bauraum beansprucht ist. Dies ist neben der deutlichen Komforterhöhung ein wesentlicher Aspekt bei der Integration derartiger Systeme in Personenkraftwagen.

Um hier ein Optimum an Bauraumeinsparung bei Bereitstellung der gewünschten Dämpfungsfunktion erlangen zu können, wird vorgeschlagen, dass die beiden Kupplungsbereiche mit ihren Widerlageranordnungen einander zugewandt positioniert sind und dass jede der Widerlageranordnungen jeweils eines der Deckscheibenetemente wenigstens zum Teil bildet.

Bei der vorangehend angegebenen Verschmelzung von Funktionen in einzelnen Bauteilen muss dafür gesorgt werden, dass die Einzelfunktionen vollständig erhalten bleiben. Es wird daher vorgeschlagen, dass die Deckscheibenelemente zur Wechselwirkung mit der Dämpferelementenanordnung ausgebildete Absbützbereiche aufweisen und dass bei dem wenigstens einen der Deckscheibenelemente die Abstützbereiche - bezogen auf eine Drehachse - radial innerhalb eines zur Reibanlage einer Kupplungsscheibenanordnung an dem Deckscheibenelement vorgesehenen Reibflächenbereichs vorgesehen sind.

Ein weiterer Beitrag zu einer kompakten Baueinheit wird dadurch geliefert, dass wenigstens eine der Anpressplattenanordnungen zur Durchführung von Einkuppel/Auskuppel-Vorgängen über das Zentralscheibenelement durchsetzende Betätigungskraftübertragungsorgane beaufschlagbar ist und dass wenigstens ein Teil der Betätigungskraftübertragungsorgane in Zusammenwirkung mit dem Zentralscheibenelement eine Drehwinketbegrenzung für die Torsionsschwingungsdämpferanordnung vorsieht Dabei ist es weiter vorteilhaft, wenn die in Zusammenwirkung mit dem Zentralscheibenelement eine Drehwinkelbegrenzung für die Torsionsschwingungsdämpferanordnung vorsehenden Betätigungskraftübertragungsorgane die der wenigstens einen Anpressplattenanordnung zugeordnete Widerlageranordnung im Wesentlichen ohne Umfangsbewegungsspiel durchsetzen. Auf diese Art und Weise ist gleichzeitig dafür gesorgt, dass die Anpressplattenanordnung und die dieser zugeordnete Widerlageranordnung bezüglich einander im Wesentlichen drehfest gehalten sind, und zwar ebenfalls durch die Betätigungskraftübertragungsorgane.

Je nach Antriebsaggregat bzw. Ausgestaltung eines Antriebssystems können verschiedene Drehzahl- bzw. Frequenzbereiche vorhanden sein, welche hinsichtlich der Anregung von Drehschwingungen kritisch sind. Da das Abdecken verschiedener anregungskritischer Bereiche mit einer einzigen Torsionsschwingungsdämpferanordnung oftmals schwierig ist, wird vorgeschlagen, dass wenigstens eine weitere Torsionsschwingungsdämpferanordnung vorgesehen ist. Diese kann in kraftubertragungsmäßiger Hinsicht zu der vorangehend bereits angesprochenen Torsionsschwingungsdämpferanordnung seriell angeordnet und beispielsweise im Bereich einer Kupplungsscheibenanordnung vorgesehen sein. Eine weitere, alternativ oder zusätzlich realisierbare Ausgestaltungsart sieht vor, dass die wenigstens eine weitere Torsionsschwingungsdämpferanordnung eingangsseitig zur Ankopplung an ein Antriebsorgan vorgesehen ist und ausgangsseitig an das Zentralscheibenelement der Torsionsschwingungsdämpferanordnung angekoppelt ist.

Alternativ oder zusätzlich ist es selbstverständlich auch möglich, die wenigstens eine weitere Torsionsschwingungsdämpferanordnung in kraftübertragungsmäßiger Hinsicht parallel zur bereits angesprochenen Torsionsschwingungsdämpferanordnung vorzusehen. Dies kann beispielsweise dadurch erlangt werden, dass die wenigstens eine weitere Torsionsschwingungsdampferanordnung eingangsseitig zur Ankopplung an ein Antriebsorgan vorgesehen ist und ferner mit einem Eingangbereich der Torsionsschwingungsdämpferanordnung gekoppelt ist und ausgangsseitig mit einem Ausgangsbereich der Torsionsschwingungsdämpferanordnung gekoppelt ist

Die erfindungsgemäße Mehrfach-Kupplungsanordnung kann weiter derart ausgestaltet sein, dass die Kupplungsanordnung im Bereich einer Gehäuseanordnung derselben bezüglich einer feststehenden Baugruppe, vorzugsweise Getriebegehäuse, in Axialrichtung oder/und Radialrichtung abgestützt ist Die Erzeugung eines vollständigen Kraftruckschtusses innerhalb der Kupplungsanordnung bei Beaufschlagung mit einer Betätigungskraft und damit die Entlastung der Lagerung einer Antriebswelle können beispielsweise dadurch erlangt werden, dass ein Eingangsbereich der Torsionsschwingungsdämpferanordnung über eine Lagerungsanordnung an einem Ausgangsbereich der Torsionsschwingungsdämpferanordnung in Axialrichtung oder/und in Radialrichtung abgestützt ist

Zur Beeinflussung der Schwingungsdämpfungscharakteristik der Torsionsschwingungsdämpferanordnung kann diese weiter eine Reibdämpfungseinrichtung aufweisen.

Vorzugsweise ist die Reibeinrichtung radial außerhalb einer Dämpferelementenanordnung der Torsionsschwingungsdämpferanordnung angeordnet.

Gemäß einem weiteren die Prinzipien der vorliegenden Erfindung ausnutzenden Aspekt wird eine baulich einfach zu realisierende Ausgestaltungsform dadurch erhalten, dass die Torsionsschwingungsdämpferanordnung eine an ein Antriebsorgan anzukoppelnde Primärseite und eine mit der Widerlageranordnung der Mehrfach-Kupplungsanordriung verbundene Sekundärseite aufweist, welche über eine Dämpferelementenanordnung mit der Primärseite zur Drehmomentübertragung gekoppelt ist.

Um hierbei eine möglichst kompakte axiale Ausgestaltung zu erlangen, wird vorgeschlagen, dass die Sekundärseite oder/und die Dämpferelementenanordnung sich bereichsweise mit einer Anpressplattenanordnung von einem der Kupplungsbereiche axial überlappt. Hierzu ist vorzugsweise die Dämpferelementenanordnung im Wesentlichen radial innerhalb der Anpressplattenanordnung des einen Kupplungsbereichs angeordnet.

Um bei der vorangehend angesprochenen axialen Staffelung von Torsionsschwingungsdämpferanordnung und Mehrfach-Kupplungsanordnung einen Versatz zwischen den beiden über dieses System zu koppelnden Wellenbereichen bzw. auch eine Neigung dieser beiden Wellenbereiche kompensieren zu können bzw. auch um ggf. Taumelbewegungen der Antriebswelle, die insbesondere bei drehmomentstarken direkteinspritzenden Otto- und Dieselmotoren auftreten können, gegenüber der bzw. den Antriebswellen kompensieren zu können, wird vorgeschlagen, dass die Sekundärseite der Torsionsschwingungsdämpferanordnung axial elastisch mit der Widerlageranordnung verbunden ist. Durch diese axial elastische Verbindung kann eine Taumelentkopplung zwischen der Torsionsschwingungsdämpferanordnung einerseits und der Widerlageranordnung andererseits erlangt werden.

Weiter kann vorgesehen sein, dass die Mehrfach-Kupplungsanordnung über die Sekundärseite der Torsionsschwingungsdämpferanordnung wenigstens axial bezüglich des Antriebsorgans abgestützt ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Teil-Längsschnittansicht einer erfindungsgemäßen Doppelkupplung gemäß einer ersten Ausgestaltungsform;
- Fig. 2: eine der Fig. 1 entsprechende Ansicht einer alternativen Ausgestaltungsart;
- Fig. 3: eine weitere der Fig. 1 entsprechende Ansicht einer alternativen Ausgestaltungsart;
- Fig. 4: eine weitere der Fig. 1 entsprechende Ansicht einer alternativen Ausgestaltungsart;

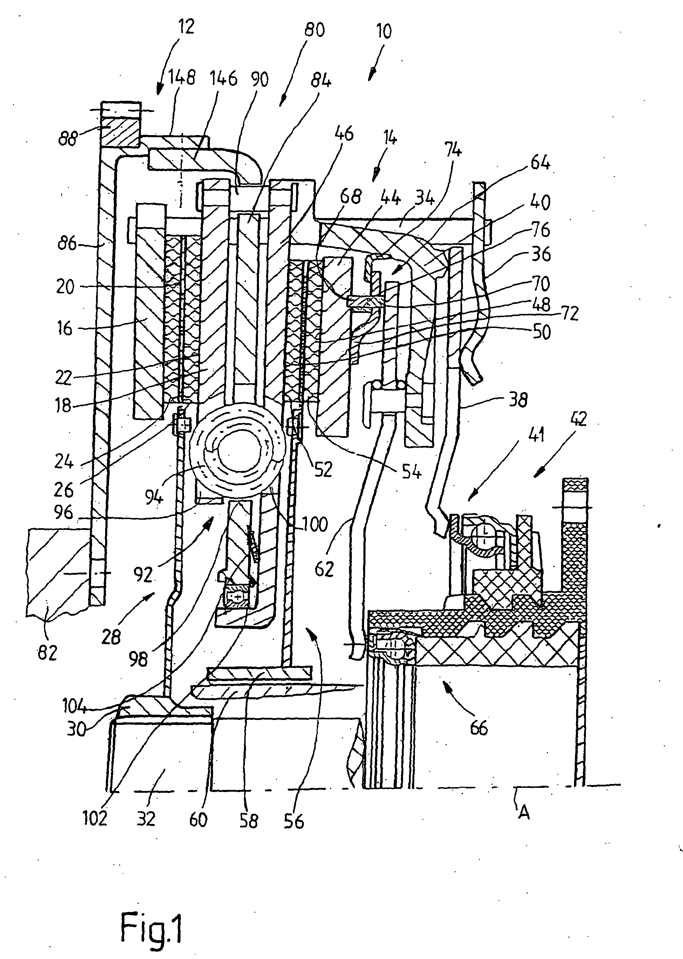

In Fig. 1 ist eine erfindungsgemäße Doppelkupplung allgemein mit 10 bezeichnet. Die Doppelkupplung 10 umfasst zwei in Richtung einer Drehachse A aufeinander folgend angeordnete Kupplungsbereiche 12, 14. Der erste Kupplungsbereich 1 2 umfasst eine Anpressplatte 16 und eine Widerlagerplatte 18, welche in Richtung einer Drehachse A einander gegenüber liegen. Zwischen diesen beiden Platten 16, 18 bzw. jeweiligen Reibflächen 20, 22 derselben liegen die Reibbeläge 24, 26 einer Kupplungsscheibe 28 des ersten Kupplungsbereichs 12. Radial innen ist die Kupplungsscheibe 28 mit einem Nabenbereich 30 zur drehfesten Ankopplung an eine erste Getriebeeingangswelle 32 ausgebildet.

Während die Widerlagerplatte 18, wie im Folgenden noch beschrieben, mit der Anpressplatte 16 im Wesentlichen drehfest gekoppelt ist und darüber hinaus in Richtung der Drehachse A - bezogen auf die Gesamtanordnung der Doppelkupplung - im Wesentlichen feststehend angeordnet ist, kann die Anpressplatte 16 zur Durchführung von Einrückvorgängen bzw. Ausrückvorgängen in Achsrichtung verschoben werden. Zu diesem Zwecke sind über den Umfang verteilt mehrere Betätigungskraftübertragungsstangen 34 vorgesehen, welche entsprechende Öffnungen der Widerlagerplatte 18 mit geringem Bewegungsspiel durchsetzen, so dass durch diese Betätigungskraftübertragungsstangen 34 zum einen eine Betätigungskraft auf die Anpressplatte 16 übertragen werden kann, und zum anderen die drehfeste Verbindung zwischen Anpressplatte 16 und Widerlagerplatte 18 hergestellt ist. An dem von der Anpressplatte 16 entfernten Ende tragen die Betätigungskraftübertragungsstangen 34 ein beispielsweise ringartig ausgebildetes Beaufschlagungsorgan 36, das in seinem radial inneren Bereich zur Übertragung einer Einrückkraft auf die Anpressplatte 16 durch einen beispielsweise als Membranfeder ausgebildeten Kraftspeicher 38 beaufschlagt wird. In seinem radial äußeren Bereich stützt sich der Kraftspeicher 38 an einem Gehäusebauteil 40 ab. Radial innen kann zum Durchführen von Ausrückvorgängen ein Betätigungsbereich 41 eines allgemein mit 42 bezeichneten Betätigungsmechanismus den Kraftspeicher 38 drückend beaufschlagen.

Auch der zweite Kupplungsbereich 14 umfasst eine Anpressplatte 44 und dieser in Richtung der Drehachse A gegenüber liegend eine Widerlagerplatte 46. Zwischen den Reibflächen 48, 50 liegen wiederum die Reibbeläge 52, 54 einer Kupplungsscheibe 56. Diese ist in ihrem radial innen angeordneten Nabenbereich 58 zur drehfesten Verbindung mit einer zweiten Getriebeeingangswelle 60 ausgebildet, welche die erste Getriebeeingangswelle 32 konzentrisch umgibt.

Ein beispielsweise wiederum als Membranfeder ausgebildeter Kraftspeicher 62 des zweiten Kupplungsbereichs 14 ist in seinem radial mittleren Bereich an dem Gehäusebauteil 40 abgestützt, beaufschlagt in seinem radial äußeren Bereich die Anpressplatte 44 über eine Verschleißnachstellvorrichtung 64 und kann in seinem radial inneren Bereich durch einen Betätigungsbereich 66 des Betätigungsmechanismus 42 zum Durchführen von Ausrückvorgängen drückend beaufschlagt werden. Es sei darauf hingewiesen, dass sowohl beim ersten Kupplungsbereich 12 als auch beim zweiten Kupplungsbereich beispielsweise in Form von Blattfedern, Schraubendruckfedern oder sonstigen elastischen Elementen ausgebildete Rückkrafterzeugungselemente den Anpressplatten 1 6 bzw. 44 zugeordnet sein können, um diese bei Durchführung von Ausrückvorgängen in Richtung von den jeweils zugeordneten Widerlagerplatten 18, 46 wegzubewegen.

Hinsichtlich der Verschleißnachstellvorrichtung 64 sei ausgeführt, dass diese von herkömmlichem Aufbau ist und beispielsweise so aufgebaut sein kann, wie in der DE 199 10 858 A1 beschrieben. Diese Druckschrift wird daher durch Bezugnahme vollständig zum Offenbarungsgehalt der vorliegenden Unterlagen aufgenommen. Es sei lediglich kurz ausgeführt, dass die Verschleißnachstellvorrichtung zwei bezüglich einander verdrehbare Nachstellringe 68, 70 aufweist, von welchen einer an der Anpressplatte 44 abgestützt ist und der andere vom Kraftspeicher 62 beaufschlagt wird. An ihren einander zugewandten Seiten weisen die Nachstellringe 68, 70 zueinander komplementäre Schrägflächen auf. Unter der Vorspannwirkung einer nicht dargestellten Feder führt eine Relativverdrehung der beiden Nachstellringe 68, 70 zu einer Vergrößerung der Axialerstreckung der diese beiden Ringe 68, 70 umfassenden Baugruppe. Es ist an der Anpressplatte 44 ferner ein beispielsweise blattfederartig ausgebildetes erstes Erfassungselement 72 festgelegt. Dieses erstreckt sich nach radial außen und übergreift den Nachstellring 70, wobei es unter seiner elastischen Vorspannkraft am Nachstellring 70 in Achsrichtung aufliegt und somit die beiden Nachstellringe 68, 70 gegeneinander und auch gegen die Anpressplatte 44 presst. Im radial äußeren Bereich überlappt sich das erste Erfassungselement 72 mit einem gehäusefesten zweiten Erfassungselement 74. Es ist ferner ein keilschieberartiges Arretierelement 76 vorgesehen, welches mit seiner keilartigen Kontur unter Vorspannung einer Feder in den zwischen dem ersten Erfassungselement 72 und der Anpressplatte 44 gebildeten Zwischenraum vorgespannt ist.

Tritt im Kupplungsbetrieb ein Verschleiß der Reibbeläge 52, 54 auf, so nähert sich die Anpressplatte 44 in Achsrichtung der Widerlagerplatte 46 an. Dabei bleibt das erste Erfassungselement 72 radial außen am zweiten Erfassungselement 74 hängen und hebt somit von dem Nachstellring 70 ab. Da in diesem Zustand die Nachstellringe 68, 70 noch unter der Beaufschlagungswirkung des Kraftspeichers 62 stehen, können diese keine Relativdrehung bezüglich einander ausführen. Das keilartige Arretierelement 76 kann sich jedoch, bedingt durch den größer werdenden Axialabstand zwischen der Anpressplatte 44 und dem ersten Erfassungselement 72 in seinem radial äußeren Bereich, geringfügig in Umfangsrichtung verlagern, bis es den vergrößerten axialen Zwischenraum zwischen der Anpressplatte 44 und dem ersten Erfaassungselement 72 wieder vollständig ausfüllt. Bei Durchführung eines Ausrückvorgangs gibt der Kraftspeicher 62 seine massive Beaufschlagungswirkung auf, so dass nunmehr die zwischen den beiden Nachstellringen 68, 70 anliegende Vorspannkraft ausreicht, die beiden Ringe bezüglich einander zu verdrehen, wobei tatsächlich bezüglich der Anpressplatte 44 nur der Nachstellring 68 verdreht wird, da der Nachstellring 70 durch das erste Erfassungseiement 72 drehfest gehalten ist. Diese Relativdrehung mit entsprechender Vergrößerung der Gesamtaxialerstreckung dieser Baugruppe hält an, bis der Nachstellring 70 wieder am ersten Erfassungselement 72 zur Anlage kommt. Es ist dann exakt dasjenige Ausmaß an Axialverschleiß kompensiert worden, das zuvor durch die Wechselwirkung der beiden Erfassungselemente 72, 74 erfasst worden ist.

Es sei darauf hingewiesen, dass selbstverständlich auch beim ersten Kupplungsbereich 12 eine entsprechende Verschleißnachstellvorrichtung vorgesehen sein könnte. Diese könnte zum einen zwischen dem Gehäusebauteil 40 und dem Kraftspeicher 38 wirken, könnte zum anderen auch zwischen dem Kraftspeicher 38 und dem Beaufschlagungselement 36 wirken. Ferner sei darauf hingewiesen, dass grundsätzlich jede Art von Verschleißnachstellvorrichtung bei zumindest einem der Kupplungsbereiche 12, 14 vorgesehen sein könnte.

Die in Fig. 1 dargestellte Doppelkupplung 10 weist ferner eine in diese Kupplung 10 integrierte Torsionsschwingungsdämpferanordnung 80 auf. Diese ist eingangsseitig zur Ankopplung an eine Antriebswelle 82 ausgebildet. Hier kann beispielsweise ein im Wesentlichen die Eingangsseite bildendes Zentralscheibenelement 84 in seinem radial äußeren Bereich mit einem beispielsweise als Flexplatte oder dergleichen ausgebildeten Verbindungsbauteil 86 verbunden sein, das radial innen dann an die Antriebswelle 82 angebunden werden kann. Dieses Verbindungsbauteil 86 kann ferner auch einen Anlasserzahnkranz 88 tragen. Man erkennt, dass mit seinem ringscheibenartigen Bereich das Zentralscheibenelement 84 axial zwischen den beiden Widerlagerplatten 18, 46 liegt. Die Verbindung des Zentralscheibenelementes 84 der Torsionsschwingungsdämpferanordnung 80 mit dem scheibenartigen Verbindungselement 86 erfolgt in jeweiligen ineinander einführbaren, näherungsweise zylindrischen Abschnitten 146, 148, in welche dann von radial außen Verbindungselemente, wie z.B. Befestigungsschrauben oder Befestigungsnieten eingebracht werden.

Die Widerlagerplatten 18, 46 bilden somit gleichzeitig auch die Deckscheibenelemente der Torsionsschwingungsdämpferanordnung 80. In ihrem radial äußeren Bereich sind die Deckscheibenelemente bzw. Widerlagerplatten 18, 46 durch eine Mehrzahl von in Umfangsrichtung aufeinander folgend angeordneten Abstandselementen 90 miteinander fest verbunden. Die Abstandselemente 90 durchsetzen das Zentralsscheibenelement 84 an mehreren Umfangspositionen, so dass sie in Zusammenwirkung mit dem Zentralscheibenelement 84 eine Relativdrehwinkelbegrenzung für die Torsionsschwingungsdämpferanordnung 80 bilden. Es sei hier darauf hingewiesen, dass auch die Betätigungskraftübertragungsstangen 34 entsprechende Öffnungen oder Aussparungen im Zentralscheibenelement 84 durchsetzen, so dass zusätzlich oder alternativ zu der angesprochenen Funktion der Abstandselemente 90 auch durch Zusammenwirken der oder einiger der Betätigungskraftübertragungsstangen 34 mit dem Zentralscheibenelement 84 die Drehwinkelbegrenzung für den im Wesentlichen durch das Zentralscheibenelement 84 bereitgestellten Eingangsbereich und den im Wesentlichen durch die Deckscheibenelemente bzw. Widerlagerplatten 18, 46 bereitgestellten Ausgangsbereich der Torsionsschwingungsdämpferanordnung 80 bereitgestellt werden kann. In diesem Falle kann beispielsweise vorgesehen sein, dass in Umfangsrichtung jeweils ein Abstandselement 90 auf eine Betätigungskraftübertragungsstange 34 folgt. Es kann somit eine vergleichsweise stabile Konfiguration des Zentralscheibenelements 84 trotz der Bereitstellung verschiedener Durchgangsöffnungen erhalten werden. Durch entsprechende Bemessung der Umfangserstreckkung dieser Öffnungen kann letztendlich ausgewählt werden, ob die Elemente 90 oder die Elemente 34 oder ggf. beide davon in Zusammenwirkung mit dem Zentralscheibenelement 84 die Drehwinkelbegrenzungsfunktion vorsehen.

Die Torsionsschwingungsdämpferanordnung 80 umfasst eine Dämpferelementenanordnung 92, beispielsweise in Form mehrerer im Wesentlichen in Umfangsrichtung orientierter Dämpferfedern 94 oder Gruppen von Dämpferfedern 94. Im Zentralscheibenelement 80 bzw. den Widerlagerplatten 18, 46 sind den Dämpferfedern 94 als Abstützbereiche jeweilige Federfenster oder Aussparungen 96, 98, 100 zugeordnet. An diesen Federfenstern bzw. den in Umfangsrichtung gelegenen Randbereichen derselben stützen sich die Dämpferfedern 94 in an sich bekannter Weise ab, so dass eine Drehmomentübertragungskopplung zwischen dem Zentralscheibenelement 84 und den Widerlagerplatten bzw. Deckscheibenelementen 18, 46 über die Dämpferfedern 94 der Dämpferelementenanordnung 92 bereitgestellt ist. Man erkennt weiter, dass im radial inneren Bereich das Deckscheibenelement bzw. die Widerlagerplatte 46 einen axialen Ansatz aufweist, an welchem über ein Lager 102 der Ausgangsbereich der Torsionsschwingungsdämpferanordnung 80, d.h. im Wesentlichen die die Widerlagerplatten 18, 46 und damit fest verbundenen Bauteile umfassende Baugruppe, sowohl axial als auch radial bezüglich des im Wesentlichen den Eingangsbereich bereitstellenden Zentralscheibenelements 84 abgestützt sind. Es sei darauf hingewiesen, dass jede Art von Lagerung, also beispielsweise Wälzkörperlagerung, Gleitlagerung o. dgl., vorgesehen sein könnte. Durch diese Lagerung ist letztendlich auch der gesamte im Drehmomentenfluss auf die Deckscheibenelemente bzw. Widerlagerplatten 18, 46 folgende Teil der Doppelkupplung 10 axial und radial bezüglich des Zentralscheibenelements 84 und somit auch bezüglich der Antriebswelle 82 abgestützt. Dies bedeutet, dass auch die durch Aktivierung der Betätigungsbereiche 41, 46 ausgeübte Betätigungskraft axial über dieses Lager 102 auf das Zentralscheibenelement 84 und somit auf die Antriebswelle 82 übertragen wird. Dies ist im Wesentlichen auch dadurch bedingt, dass das Gehäusebauteil 40, an dem die beiden Kraftspeicher 38, 62 abgestützt sind, in seinem radial äußeren Bereich beispielsweise auch unter Verwendung der Abstandselemente 90 mit den Widerlagerplatten 18, 46 fest verbunden ist.

Man erkennt in Fig. 1 ferner, dass der Torsionsschwingungsdämpferanordnung 80 eine Trockenreibeinrichtung zugeordnet ist, welche beispielsweise eine zwischen dem Zentralscheibenelement 84 und dem Deckscheibenelement 46 unter Vorspannung anliegende Teller- oder Wellfeder umfassen kann, die an jeweiligen Oberflächenbereichen oder speziell dafür vorgesehenen Reibringen unter Vorspannung anliegt.

In die Doppelkupplung 10 ist also die Funktion eines Torsionsschwingungsdämpfers integriert, wobei hier verschiedene Bauteile der Torsionsschwingungsdämpferanordnung 88 gleichzeitig auch als Bauteile der Doppelkupplung 10 eingesetzt sind. Auf Grund dieser Teile - bzw. funktionsmäßigen Verschmelzung kann bei Bereitstellung einer Schwingungsdämpfungsfunktion für beide Kupplungsbereiche 12, 14 ein sehr kompakter Aufbau erhalten werden.

Des Weiteren sei darauf hingewiesen, dass bei der in Fig. 1 dargestellten Ausgestaltungsform, ebenso wie bei allen folgend noch beschriebenen Ausgestaltungsformen, an den Widerlagerplatten 18 oder/und 46 zur Bereitstellung der Wechselwirkung mit den Dämpferfedern 94 zusätzliche Elemente, beispielsweise aus Blechmaterial, beispielsweise durch Vernietung angebracht werden können, die dann sowohl die Abtützung bzw. Führung der Dämpferfedern 94 als auch die Funktion der Lagerung übernehmen. Diese Ausgestaltung ist auf Grund der leichteren Bearbeitbarkeit von Blechelementen vorteilhaft. Die Widerlagerplatten 18, 46 werden auf Grund der auftretenden Belastung vorzugsweise aus Gussmaterial hergestellt.

Ferner wird darauf hingewiesen, dass der erfindungsgemäße Aufbau, bei welchem in eine Doppelkupplung eine Torsionsschwingurigsdämpferanordnung integriert ist, unabhängig davon vorgesehen sein kann, ob die verschiedenen Kupplungsbereiche von dem in der Fig. 1 dargestellten normal-geschlossen-Typ oder einem normal-offen-Typ sind, bei welchem, im Gegensatz zu der Anordnung der Fig. 1, bei Aktivierung der Betätigungsbereiche 41, 66 nicht eine die Beaufschlagungswirkung von Kraftspeichern aufhebende Ausrückkraft erzeugt wird, sondern eine beispielsweise über Hebelelemente o. dgl. auf die Anpressplatten übertragene Einrückkraft erzeugt wird. Auch ist selbstverständlich die Ausgestaltung eines Kupplungsbereichs als normal-offen-System und eines Kupplungsbereichs als normal-geschlossen-System möglich.

Des Weiteren ist es selbstverständlich möglich, die Betätigung durch beliebige Betätigungssysteme, wie z.B. auch hydraulische Geberzylinder/Nehmerzylinder-Systeme oder herkömmliche Ausrückgabeln, vorzusehen.

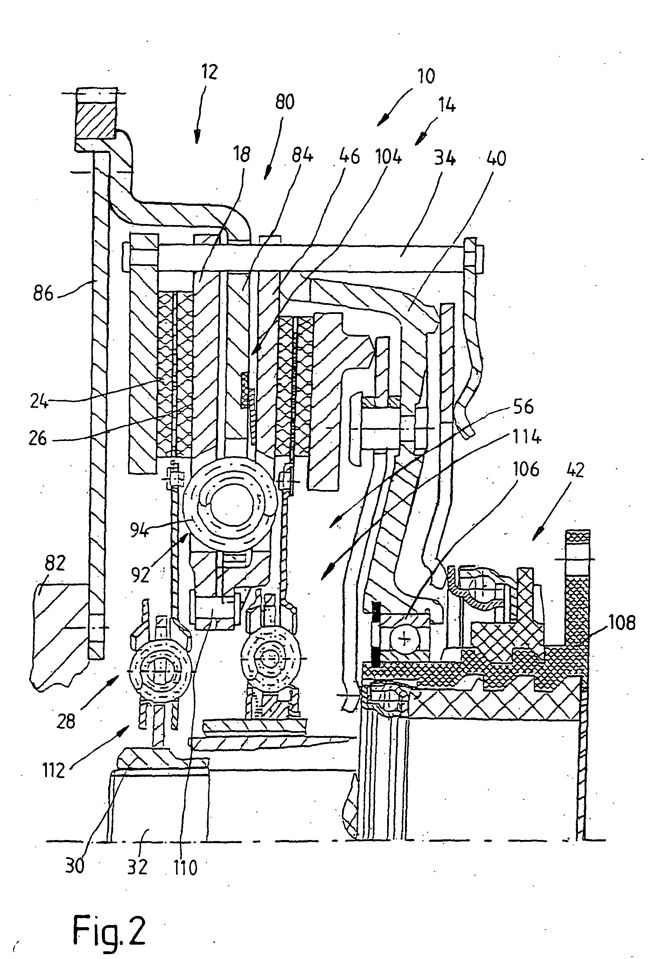

In Fig. 2 ist eine alternative Ausgestaltungsform der erfindungsgemäßen Doppelkupplung 10 dargestellt. Komponenten, welche vorangehend beschriebenen Komponenten hinsichtlich Aufbau bzw, Funktion entsprechen, sind mit dem gleichen Bezugszeichen bezeichnet. Im Folgenden wird im Wesentlichen auf die konstruktiven bzw. funktionellen Unterschiede eingegangen.

Man erkennt in Fig. 2, dass das Gehäusebauteil 40 in seinem radial inneren. Bereich über ein Lager 106 an einem im Wesentlichen feststehenden, beispielsweise am Getriebegehäuse angebrachten Bauteil 108, das gleichzeitig auch eine Komponente des Betätigungsmechanismus 42 sein kann, sowohl in Achsrichtung als auch in Radialrichtung abgestützt ist. Dies bedeutet, dass die durch den Betätigunsgmeachanismus 42 auf die Doppelkupplung 10, insbesondere auch das Gehäusebauteil 40 derselben, ausgeübten Betätigungskräfte durch Kraftrückfluss wieder in das Bauteil 108 eingeleitet werden und somit die Betätigungskräfte nicht auf das Zentralscheibenelement 84 übertragen werden. Infolgedessen wird auch die Antriebswelle 82 von Betätigungskräften freigehalten, was eine wesentliche Entlastung der Lager derselben mit sich bringt. Bei dieser Ausgestaltungsform erfolgt die Verbindung des Zentralscheibenelements 84 mit dem scheibenartig ausgebildeten Verbindungslement 86 in jeweiligen radial sich erstreckenden Abschnitten derselben, in welche dann in Achsrichtung Befestigungselemente eingebracht werden können.

Man erkennt weiter, dass die beiden Deckscheibenelemente bzw. Widerlagerplatten 18, 46 nicht radial außen, sondern nunmehr radial innen durch Nietbolzen 110 o. dgl. fest miteinander verbunden sind. Hierzu ist zumindest eines der Deckscheibenelemente 18, 46 axial abgekröpft. Die Reibeinrichtung 104 ist nunmehr radial außerhalb der Dämpferfedern 94 angeordnet und liegt näherungsweise im radialen Bereich der Reibbeläge der Kupplungsscheiben 28, 56.

Die Drehwinkelbegrenzungsfunktion kann auch bei dieser Ausgestaltungsform sowohl durch die Widerlagerplatten bzw. Deckscheibenelemente 18, 46 als auch das Zentralscheibenelement 84 durchsetzenden Betätigungskraftübertragungsstangen 34 in Zusammenwirkung mit dem Zentralscheibenelement 84 erfolgen, als auch durch Zusammenwirkung des radial inneren und strichliert angedeuteten Bereichs des Zentralscheibenelements 84 mit zumindest einem der Deckscheibenelemente 18, 46. Hierzu ist es möglich, in diesem Deckscheibenelement entsprechende Aussparungen vorzusehen, in welchen dann nach radial innen greifende Vorsprünge des Zentralscheibenelements 84 in Umfangsrichtung in begrenztem Ausmaß bewegbar sind.

Die beiden Kupplungsscheiben 28, 56 weisen in dem in Fig. 2 dargestellten Ausführungsbeispiel ebenfalls Torsionsschwingungsdämpfer 112, 114 auf, die in herkömmlicher Art und Weise wieder mit einem Zentralscheibenelement und beidseits davon Deckscheibenelementen aufgebaut sind. Die Drehmomentübertragungskopplung erfolgt über Dämpferfedern. Im dargestellten Beispiel trägt jeweils eines der Deckscheibenelemente die zugeordneten Reibbeläge. Das Zentralscheibenelement ist an die radial innen liegende Nabe angebunden. Hier könnte selbstverständlich auch eine Umkehrung dieser Anordnung vorgesehen sein. Auch ist es selbstverständlich möglich, diese im Bereich der Kupplungsscheiben 28, 56 vorgesehenen Torsionsschwingungsdämpfermehrstufig auszubilden. Die Torsionsschwingungsdämpferanordnung 80 und die beiden in den Kupplungsscheiben 28 und 56 vorgesehenen Torsionsschwingungsdämpfer 112, 114 sind in drehmomentübertragungsmäßiger Hinsicht zueinander seriell geschaltet. D.h., wird von der Antriebswelle 82 beispielsweise über den ersten Kupplungsbereich 12 ein Drehmoment auf die erste Getriebeeingangswelle 32 übertragen, so geht der Kraft- bzw. Drehmomentenfluss zunächst über die Torsionsschwingungsdämpferanordnung 80, dann die Reibbeläge 24, 26 der Kupplungsscheibe 28 in den Torsionsschwingungsdämpfer 112 und von diesem über die Nabe 30 auf die Getriebeeingangswelle 32. Hier ist es durch entsprechende Auslegung der Federkennlinien und möglicherweise auch Ausgestaltung bzw. Bereitstellung verschiedener Trockenreibeinrichtungen möglich, beispielsweise die in den Kupplungsscheiben 28, 56 vorgesehenen Torsionsschwingungsdämpfer 112, 114 als sogenannte Leerlaufdämpfer wirken zu lassen, die bei nur geringem anliegenden Drehmoment zur Erfüllung der Dämpfungsfunktion wirksam sind, während in diesem Zustand beispielsweise durch die Reibeinrichtung 104 die Torsionsschwingungsdämpferanordnung 80 noch verblockt und somit im Wesentlichen als steife Baugruppe bereitgestellt ist. Erst bei größeren zu übertragenden Drehmomenten, bei welchen die Torsionsschwingungsdämpfer 112, 114 ggf. bereits ihre Endanschlagposition erreicht haben, wird dann die Reibwirkung der Reibeinrichtung 104 überwunden und die Dämpfungsfunktion der Torsionsschwingungsdämpferanordnung 80 setzt ein. Insbesondere ist es dabei möglich, die Torsionsschwingungsdämpfer 112, 114 auf das Motormoment abzustimmen, so dass die damit einhergehende Absenkung der Eigenfrequenz des gesamten schwingenden Systems ein Fahren in einem Frequenzbereich ausschließlich oberhalb eines kritischen Bereichs zulässt.

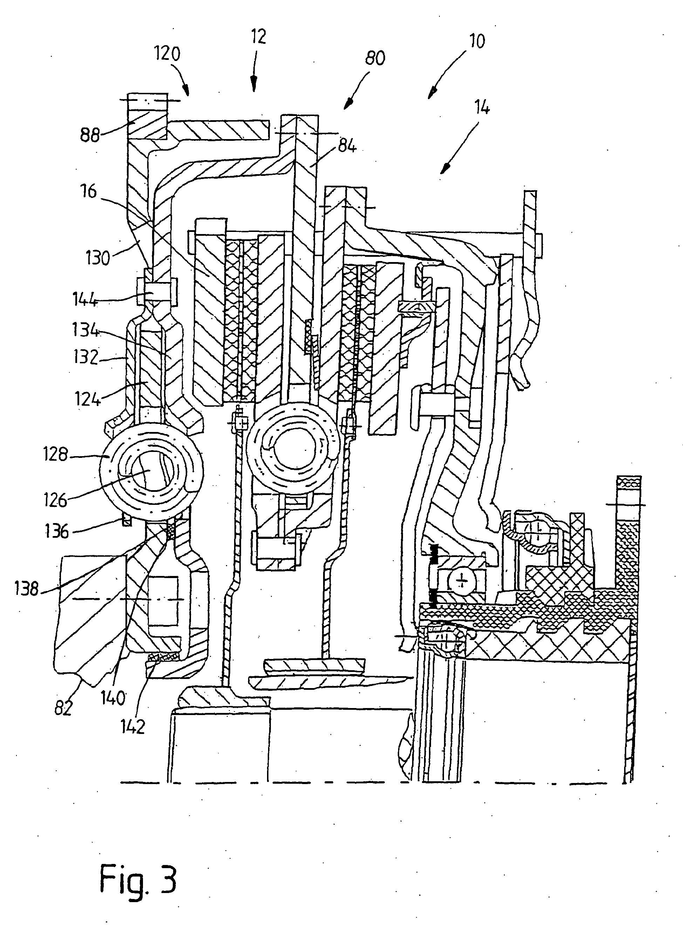

Eine weitere alternative Ausgestaltungsart einer erfindungsgemäßen Doppelkupplung 10 ist in Fig. 3 dargestellt. Auch hier sind Komponenten mit gleichem Aufbau bzw. gleicher Funktion wieder mit den gleichen Bezugszeichen bezeichnet, wie bei den vorangehend beschriebenen Ausgestaltungsformen.

Bei der in Fig. 3 dargestellten Doppelkupplung 10 ist das Zentralscheibenelement 84 an die Antriebswelle 82 über einen weiteren Torsionsschwingungsdämpfer 120 angebunden. Auch dieser weist ein beispielsweise aus Blechmaterial gestanztes und gebogenes Zentralscheibenelement 124 auf, das radial innen an die Antriebswelle 82 angeschraubt ist, radial außen den Anlasserzahnkranz 84 trägt und in seinem radial mittleren Bereich Federfenster 126 für die Dämpferfedern 128 dieser Torsionsschwingungsdämpferanordnung 120 aufweist und weitere in Umfangsrichtung verteilt liegende und hinsichtlich ihrer Funktion nachfolgend beschriebene Aussparungen 130 aufweist.

Beidseits dieses Zentralscheibenelementes 124 liegen wieder Deckscheibenelemente 132, 134. Diese weisen ebenfalls Federfenster 136, 138 zur Abstützung der Dämpferfedern auf. Das dem ersten Kupplungsbereich 12 nahe liegende Deckscheibenelement 34 ist über Lagerungen 140, 142 an dem Zentralscheibenelement 124 sowohl axial als auch radial abgestützt und ist in seinem radial äußeren Bereich mit dem Zentralscheibenelement 84 der vorangehend bereits detailliert beschriebenen, in die Doppelkupplung 10 integrierten Torsionsschwingungsdämpferanordnung 80 beispielsweise durch Verschraubung fest verbunden.

Man erkennt, dass die beiden Deckscheibenelemente 132, 134 im radialen Bereich der Aussparungen 130 miteinander durch Nietbolzen 144 fest verbunden sind. Die Aussparungen und die in diesen liegenden Umfangsabschnitte der beiden Deckscheibenelemente 132, 134 sind hinsichtlich ihrer Umfangserstreckungsrichtung so aufeinander abgestimmt, dass sie gleichzeitig auch die Drehwinkelbegrenzungsfunktion für diese weitere Torsionsschwingungsdämpferanordnung 120 bereitstellen können.

Die Montage dieses Systems kann beispielsweise so erfolgen, dass zunächst die weitere Torsionsschwingungsdämpferanordnung 120 in ihrem radial inneren Bereich an die Antriebswelle 82 angeschraubt wird; in dem Zustand, in dem das Zentralscheibenelement 84 noch nicht an das Deckscheibenelement 1 34 angebunden ist, ist hier ein axialer Zugang vorhanden. Darauf folgend wird die Doppelkupplung 10 bzw. der verbleibende Bereich, welcher ggf. bereits mit einem Getriebe zusammengefügt ist, axial herangeführt und dann die Verbindung zwischen dem Zentralscheibenelement 84 und dem Deckscheibenelement 134 hergestellt.

Auch hier ist wieder eine serielle Schaltung der verschiedenen Elastizitäten bzw. Torsionsschwingungsdämpferanordnungen 80, 120 vorgesehen, welche selbstverständlich auch zusätzlich noch mit den in Fig. 2 erkennbaren Torsionsschwingungsdämpfern in den Kupplungsscheiben kombiniert werden können. Es lässt sich somit bei vergleichsweise großem Federweg die Federsteifigkeit verringern und somit eine bessere Beherrschbarkeit der Eigenschwingungen des Systems erlangen. Man erkennt auch bei dieser Ausgestaltungsform, dass nicht nur im Bereich der Torsionsschwingungsdämpferanordnung 80 ein axialer Übertapp mit der Doppelkupplung 10 vorhanden ist, sondern auch im Bereich der seriell zur Torsionsschwingungsdämpferanordnung 80 geschalteten Torsionsschwingungsdämpferanordnung 120. Man erkennt, dass das Deckscheibenelement 134 zumindest mit seinem radial weiter innen liegenden Bereich und auch die Dämpferfedern 128, welche mit ihrer Längserstreckung im Wesentlichen tangential bezüglich der Drehachse orientiert sind, sich axial mit der Anpressplatte 16 des ersten Kupplungsbereichs 12 überlappen. Um hier ausreichenden axialen Bauraum zur Verfügung zu haben, sind die beiden Kupplungsscheiben der Kupplungsbereiche 12, 14 als starre Scheiben ohne axialen Bauraum beanspruchende Torsionsschwingungsdämpferanordnungen, wie diese beispielsweise in Fig. 2 erkennbar sind, ausgebildet. Die in Fig. 3 erkennbare axiale Ineinandereingliederung der Torsionsschwingungsdämpferanordnung 120 einerseits und der Doppelkupplung 10 andererseits wird vor allem dadurch begünstigt, dass bei einer derartigen trocken laufenden Torsionsschwingungsdämpferanordnung 120 die Dämpferfedern 128 radial vergleichsweise weit nach innen verlagert sein müssen, um die auf diese einwirkenden Fliehkräfte und die somit erforderlichen Abstützkräfte zu reduzieren. Es kann somit der Reibverschleiß im Bereich der radialen Abstützung der Dämpferfedern 128 gemindert werden.

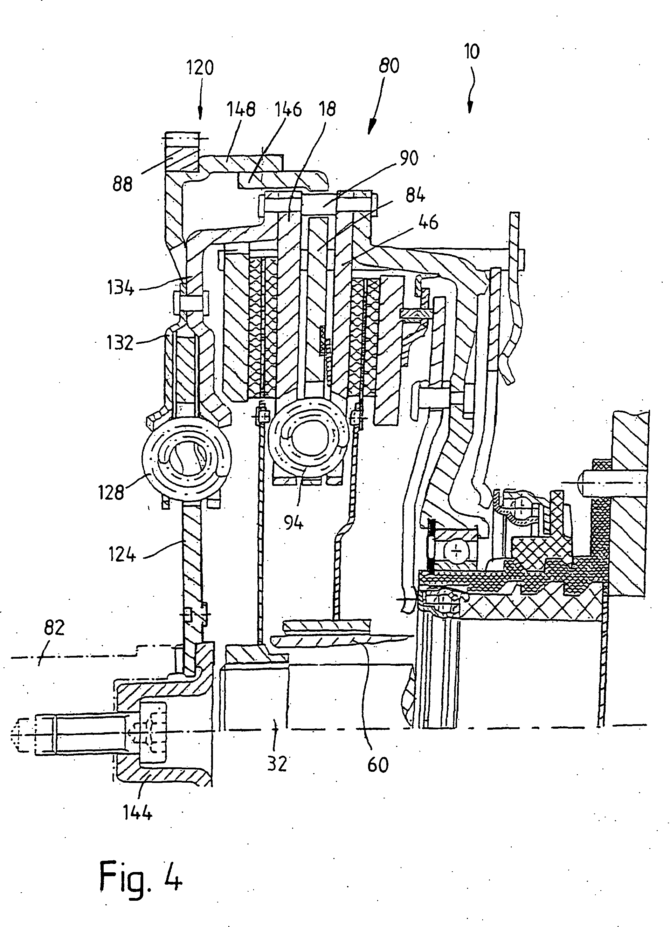

In Fig. 4 ist eine abgewandelte Ausgestaltungsart des in Fig. 3 dargestellten Systems gezeigt. Bei der in Fig. 4 dargestellten Anordnung liegt eine hinsichtlich der Drehmomentenübertragung parallele Anordnung der beiden Torsionsschwingungsdämpferanordnungen 80, 120 vor. Man erkennt, dass die an die Antriebswelle 82 anzubindende Torsionsschwingungsdämpferanordnung 120 eingangsseitig, d.h. mitihrem Zentralscheibenelement 124, an die Antriebswelle 82 angebunden ist. Dieses Zentralscheibenelement 124 ist gleichzeitig auch mit dem Zentralscheibenelement 84 der Torsionsschwingungsdämpferanordnung 80 gekoppelt. Bezogen auf eine normale Drehmomentübertragungsrichtung von der Antriebswelle 82 zu den beiden Getriebeeingangswellen 32, 60, sind hier also die beiden Eingangsbereiche der Torsionsschwingungsdämpferanordnungen 80,120 miteinander festgekoppelt.

Ausgangsseitig, also mit den beiden Deckscheibenelementen 132, 134, ist die Torsionsschwingungsdämpferanordnung 120 an die Ausgangsseite der Torsionsschwingungsdämpferanordnung 80, also die beiden Deckscheibenlemente bzw. Widerlagerplatten 18, 46. Diese Anbindung kann beispielsweise über die vorangehend bereits beschriebenen Abstandselemente 90 erfolgen. Die Dämpferfedern 94, 128 wirken somit bei Drehmomentübertragung zueinander parallel. Durch die damit einhergehende Verringerung der Elastizität kann auch eine Absenkung der kritischen Resonanzfrequenz erzielt werden. Zusätzliche Dämpfungsmaßnahmen, wie sie beispielsweise bei nasslaufenden Zwei-Massenschwungrädern bekannt sind, sind bei einer derartigen Bauweise nicht erforderlich. Durch die Parallelschaltung verschiedener Steifigkeiten bei erhaltenem Gesamtfederweg, ist es auch möglich, einen Einsatz bei höheren zu übertragenden Motormomenten zu realisieren.

Bei der in Fig. 4 dargestellten Anordnung kann die Montage dadurch erfolgen, dass zunächst wieder die Torsionsschwingungsdämpferanordnung 120 an die Antriebswelle 82 angebunden wird. Dies kann, wie in Fig. 4 erkennbar, beispielsweise durch an der Antriebswelle 82 und dem Zentralscheibenelement 124 vorgesehene Hirthverzahnungen erfolgen, die durch ein zentral positioniertes Anpresselement 144 in gegenseitigem Eingriff gehalten werden. Daraufhin wird der ggf. bereits mit einem Getriebe zusammengesetzte Bereich der Doppelkupplung 10 herangeführt. Hier können die beiden Zentralscheibenelemente 84, 124 ineinander einschiebbare, im Wesentlichen zylindrisch ausgebildete Abschnitte 146, 148 aufweisen, in welche dann beispielsweise von radial außen Verbindungselemente, wie z.B. Schraubbolzen oder Nietbolzen, eingebracht werden können.

Bei der in Fig. 4 dargestellten Ausgestaltungsvariante ist ebenso ein modulartiger Aufbau möglich, bei welchem zunächst die gesamte Doppelkupplung 10 auch mit der weiteren Torsionsschwingungsdämpferanordnung 120 zusammengefügt wird und diese Baugruppe dann axial an die Antriebswelle 82 herangeführt wird. Sind in diesem Zustand Getriebeeingangswellen 32, 60 noch nicht in die Kupplungsscheiben eingeführt, hat man Zugriff zu dem zentral angeordneten Anpresselement 144, um dieses durch Anziehen eines Schraubbolzens dann an der Antriebswelle 82 zu verankern.

Es sei darauf hingewiesen, dass zum Erleichtern des Zusammenfügens verschiedener Baugruppen Montagewerkzeuge mit jeweiligen Führungen, wie z.B. Passstiften oder dergleichen eingesetzt werden können. Diese Montagewerkzeuge oder Montagehilfen können in die Doppelkupplung selbst, beispielsweise auch in die Kupplungsscheiben bereits integriert sein.

## Patentansprüche

1. Mehrfach-Kupplungsanordnung, insbesondere Kraftfahrzeug-Doppelkupplung, umfassend:
- einen ersten Kupplungsbereich (12) mit einer ersten Anpressplattenanordnung (16), einer ersten Widerlageranordnung (18) und einer zur Drehmomentübertragung über den ersten Kupplungsbereich (12) zwischen der ersten Anpressplattenanordnung (16) und der ersten Widerlageranordnung (18) einspannbaren ersten Kupplungsscheibenanordnung (28),
- einen zweiten Kupplungsbereich (14) mit einer zweiten Anpressplattenanordnung (44), einer zweiten Widerlageranordnung (46) und einer zur Drehmomentübertragung über den zweiten Kupplungsbereich (14) zwischen der zweiten Anpressplattenanordnung (44) und der zweiten Widerlageranordnung (46) einspannbaren zweiten Kupplungsscheibenanordnung (56) und
wobei wenigstens einem der Kupplungsbereiche (12, 14) eine Torsionsschwingungsdämpferanordnung (80) zugeordnet ist und wobei die Torsionsschwingungsdämpferanordnung (80) - bezogen auf eine Drehachse (A) - wenigstens teilweise im axialen Bereich des ersten Kupplungsbereichs (12) oder/und des zweiten Kupplungsbereichs (14) angeordnet ist,
**dadurch gekennzeichnet, dass**
die Torsionsschwingungsdämpferanordnung (80) ein Zentralscheibenelement (84) und an beiden Seiten davon jeweils ein Deckscheibenelement (18, 46) umfasst, wobei die Deckscheibenelemente miteinander fest verbunden sind und mit dem Zentralscheibenelement (84) über eine Dämpferelementenanordnung (92) zur Drehmomentübertragung gekoppelt sind, und wobei wenigstens eines der Deckscheibenelemente (18, 46) wenigstens einen Teil der Widerlageranordnung (18, 46) von einem der Kupplungsbereiche (12, 14) bildet.

2. Mehrfäch-Kupplungsanordnung nach Anspruch 1,
**dadurch gekennzeichnet, dass** wenigstens eine der Widerlageranordnungen (18, 46) einen Teil der Torsionsschwingungsdämpferanordnung (80) bildet.

3. Mehrfach-Kupptungsanordnung nach Anspruch 1,
**dadurch gekennzeichnet, dass** die beiden Kupplungsbereiche (12, 14) mit ihren Widerlageranordnungen (18, 46) einander zugewandt positioniert sind und dass jede der Wideriageranordnungen (18, 46) jeweils eines der Deckscheibenelemente (18, 46) wenigstens zum Teil bildet.

4. Mehrfach-Kupplungsanordnung nach Anspruch 1 oder 3,
**dadurch gekennzeichnet, dass** die Deckscheibenelemente (18, 46) zur Wechselwirkung mit der Dämpferelementenanordnung (92) ausgebildete Abstützbereiche (96, 100) aufweisen und dass bei dem wenigstens einen der Deckscheibenelemente (18, 46) die Abstützbereiche (96, 100) radial innerhalb eines zur Reibanlage einer Kupplungsscheibenanordnung (28, 56) an dem Deckscheibenelement (18, 46) vorgesehenen Reibflächenbereichs (22, 50) vorgesehen sind.

5. Mehrfach-Kupplungsanordnung nach einem der Ansprüche 1, 3 oder 4.
**dadurch gekennzeichnet, dass** wenigstens eine (16) der Anpressptattenanvrdnungen (16, 44) zur Durchführung von Einkuppel/Auskuppel-Vorgängen über das Zentralscheibenelement (84) durchsetzende Betätigungskraftübertragungsorgane (34) beaufschlagbar ist und dass wenigstens ein Teil der Betätigungskraftübertragungsorgane (34) in Zusammenwirkung mit dem Zentralscheibenelement (84) eine Drehwinkelbegrenzung für die Torsionsschwingungsdämpferanordnung (80) vorsieht.

6. Mehrfach-Kupplungsanordnung nach Anspruch 5,
**dadurch gekennzeichnet, dass** die in Zusammenwirkung mit dem Zentralscheibenelement (84) eine Drehwinkelbegrenzung für die Torsionsschwingungsdämpferanordnung (80) vorsehenden Betätigungskraftübertragungsorgane (34) die der wenigstens einen Anpressplattenanordnung (16) zugeordnete Widerlageranordnung (18) im Wesentlichen ohne Umfangsbewegungsspiel durchsetzen.

7. Mehrfach-Kupplungsanordnung nach einem der Ansprüche 1 bis 6,
**gekennzeichnet durch** wenigstens eine weitere Torsionsschwingungsdämpferanordnung (112, 114; 120).

8. Mehrfach-Kupplungsanordnung nach Anspruch 7,
**dadurch gekennzeichnet, dass** die wenigstens eine weitere Torsionsschwingungsdämpferanordnung (112, 114; 120) zu der Torsionsschwingungsdämpferanordnung (80) drehmomentenübertragungsmäßig seriell angeordnet ist

9. Mehrfach-Kupplungsanordnung nach Anspruch 8,
**dadurch gekennzeichnet, dass** die wenigstens eine weitere Torsionsschwingungsdämpferanordnung (112, 114) im Bereich einer Kupplungsscheibenanordnung (28, 56) vorgesehen ist.

10. Mehrfach-Kupplungsanordnung nach Anspruch 8 oder 9,
**dadurch gekennzeichnet, dass** die wenigstens eine weitere Torsionsschwingungsdämpferanordnung (120) eingangsseitig zur Ankopplung an ein Antriebsorgan (82) vorgesehen ist und ausgangsseitig an das Zentralscheibenelement (84) der Torsionsschwingungsdämpferanordnung (80) angekoppelt ist.

11. Mehrfach-Kupplungsanordnung nach einem der Ansprüche 7 bis 10,
**dadurch gekennzeichnet, dass** die wenigstens eine weitere Torsionsschwingungsdämpferanordnung (120) zur Torsionsschwingungsdämpferanordnung (80) drehmomentenübertragungsmäßig parallel angeordnet ist.

12. Mehrfach-Kupplungsanordnung nach Anspruch 11,
**dadurch gekennzeichnet, dass** die wenigstens eine weitere Torsionsschwingungsdämpferanordnung (120) eingangsseitig zur Ankopplung an ein Antriebsorgan (82) vorgesehen ist und ferner mit einem Eingangbereich (84) der Torsionsschwingungsdämpferanordnung (80) gekoppelt ist und ausgangsseitig mit einem Ausgangsbereich (18, 46) der Torsionsschwingungsdämpferanordnung (80) gekoppelt ist.

13. Mehrfach-Kupplungsanordnung nach einem der Ansprüche 1 bis 12,
**dadurch gekennzeichnet, dass** die Kupplungsanordnung (10) im Bereich einer Gehäuseanordnung (40) derselben bezüglich einer feststehenden Baugruppe, vorzugsweise Getriebegehäuse, in Axialrichtung oder/und Radialrichtung abgestützt ist.

14. Mehrfach-Kupplungsanordnung nach einem der Ansprüche 1 bis 13,
**dadurch gekennzeichnet, dass** ein Eingangsbereich (84) der Torsionsschwingungsdämpferanordnung (80) über eine Lagerungsanordnung (102) an einem Ausgangsbereich (18, 46) der Torsionsschwingungsdämpferanordnung (80) in Axialrichtung oder/und in Radialrichtung abgestützt ist.

15. Mehrfach-Kupplungsanordnung nach einem der Ansprüche 1 bis 14,
**dadurch gekennzeichnet, dass** die Torsionsschwingungsdämpferanordnung (80) eine Reibdämpfungseinrichtung (104) aufweist.

16. Mehrfach-Kupplungsanordnung nach Anspruch 16,
**dadurch gekennzeichnet, dass** die Reibeinrichtung (218) radial außerhalb einer Dämpferelementenanordnung (128) der Torsionsschwingungsdämpferanordnung (120) angeordnet ist.

17. Mehrfach-Kupplungsanordnung nach einem der Ansprüche 1 bis 17,
**dadurch gekennzeichnet, dass** die Torsionsschwingungsdämpferanordnung (120) eine an ein Antriebsorgan anzukoppelnde Primärseite (208) und eine mit der Widerlageranordnung 18 der Mehrfach-Kupplungsanordnung (10) verbundene Sekundärseite (212) aufweist, welche über eine Dämpferelementenanordnung (128) mit der Primärseite (208) zur Drehmomentübertragung gekoppelt ist.

18. Mehrfach-Kupplungsanordnung nach Anspruch 18,
**dadurch gekennzeichnet, dass** die Sekundärseite (212) oder/und die Dämpferelementenanordnung (128) sich bereichsweise mit der Anpressplattenanordnung (16) und/oder der Widerlageranordnung (18") von einem (12) der Kupplungsbereiche (12, 14) axial überlappt.

19. Mehrfach-Kupplungsanordnung nach Anspruch 19,
**dadurch gekennzeichnet, dass** die Dämpferelementenanordnung (128) im Wesentlichen radial innerhalb der Anpressplattenanordnung (16) und/oder der Widerlageranordnung (18") des einen Kupplungsbereichs (12) angeordnet ist.

20. Mehrfach-Kupplungsanordnung nach einem der Ansprüche 18 bis 20,
**dadurch gekennzeichnet, dass** die Sekundärseite (212) der Torsionsschwingungsdämpferanordnung (120) axial elastisch mit der Widerlageranordnung (18) verbunden ist.

21. Mehrfach-Kupplungsanordnung nach einem der Ansprüche 18 bis 21,
**dadurch gekennzeichnet, dass** die Mehrfach-Kupplungsanordnung (10) über die Sekundärseite (212) der Torsionsschwingungsdämpferanordnung (120) wenigstens axial bezüglich des Antriebsorgans abgestützt ist.

## Claims

1. Multi-clutch arrangement, in particular a dual clutch for a motor vehicle, comprising
- a first clutch area (12) having a first contact pressure plate arrangement (16), a first counter-bearing arrangement (18) and a first clutch disc arrangement (28), which can be clamped between the first contact pressure plate arrangement (16) and the first counter-bearing arrangement (18) for the transmission of torque via the first clutch area (12),
- a second clutch area (14) having a second contact pressure plate arrangement (44), a second counter-bearing arrangement (46) and a second clutch disc arrangement (56), which can be clamped between the second contact pressure plate arrangement (44) and the second counter-bearing arrangement (46) for the transmission of torque via the second clutch area (14), a torsional vibration damper arrangement (80) being assigned to at least one of the clutch areas (12, 14) and the torsional vibration damper arrangement (80) being arranged at least partially in the axial area of the first clutch area (12) and/or of the second clutch area (14), relative to the axis of rotation (A),
**characterized in that** the torsional vibration damper arrangement (80) comprises a central disc element (84) and a cover disc element (18, 46) on either side thereof, the cover disc elements being firmly connected to one another and being coupled to the central disc element (84) by way of a damper element arrangement (92) for the transmission of torque, and at least one of the cover disc elements (18, 46) forming at least a part of the counter-bearing arrangement (18, 46) of one of the clutch areas (12, 14).

2. Multi-clutch arrangement according to Claim 1, **characterized in that** at least one of the counter-bearing arrangements (18, 46) forms a part of the torsional vibration damper arrangement (80).

3. Multi-clutch arrangement according to Claim 1, **characterized in that** the two clutch areas (12, 14) are positioned with their counter-bearing arrangements (18, 46) facing one another and that each of the counter-bearing arrangements (18, 46) at least partially forms one of the cover disc elements (18, 46).

4. Multi-clutch arrangement according to Claim 1 or 3, **characterized in that** the cover disc elements (18, 46) have support areas (96, 100) designed for interaction with the damper element arrangement (92) and that in at least one of the cover disc elements (18, 46) the support areas (96, 100) are provided radially inside a friction surface area (22, 50) intended for the frictional bearing of a clutch disc arrangement (28, 56) against the cover disc element (18, 46).

5. Multi-clutch arrangement according to any one of Claims 1, 3 or 4 **characterized in that** at least one (16) of the contact pressure plate arrangements (16, 44) can be actuated to perform engaging/disengaging sequences by way of actuating force transmission members (34) passing through the central disc element (84) and that through interaction with the central disc element (84) at least some of the actuating force transmission members (34) serve to limit a rotational angle of the torsional vibration damper arrangement (80).

6. Multi-clutch arrangement according to Claim 5, **characterized in that** the actuating force transmission members (34), serving to limit a rotational angle of the torsional vibration damper arrangement (80) through their interaction with the central disc arrangement (84), pass through the counter-bearing arrangement (18) assigned to at least one contact pressure plate arrangement (16) substantially without any circumferential play.

7. Multi-clutch arrangement according to any one of Claims 1 to 6, **characterized by** at last one further torsional vibration damper arrangement (112, 114; 120).

8. Multi-clutch arrangement according to Claim 7, **characterized in that** with respect to the transmission of torque said minimum of one further torsional vibration damper arrangement (112, 114; 120) is arranged in series with the torsional vibration damper arrangement (80).

9. Multi-clutch arrangement according to Claim 8, **characterized in that** said minimum of one further torsional vibration damper arrangement (112, 114) is provided in the area of a clutch disc arrangement (28, 56).

10. Multi-clutch arrangement according to Claim 8 or 9, **characterized in that** on the input side said minimum of one further torsional vibration damper arrangement (120) is intended for coupling to a drive member (82), and on the output side is coupled to the central disc element (84) of the torsional vibration damper arrangement (80).

11. Multi-clutch arrangement according to any one of Claims 7 to 10, **characterized in that** with respect to the transmission of torque said minimum of one further torsional vibration damper arrangement (120) is arranged in parallel with the torsional vibration damper arrangement (80).

12. Multi-clutch arrangement according to Claim 11, **characterized in that** on the input side said minimum of one further torsional vibration damper arrangement (120) is intended for coupling to a drive member (82) and is furthermore coupled to an input area (84) of the torsional vibration damper arrangement (80), and on the output side is coupled to an output area (18, 46) of the torsional vibration damper arrangement (80).

13. Multi-clutch arrangement according to any one of Claims 1 to 12, **characterized in that** the clutch arrangement (10), in the area of a housing arrangement (40) thereof, is axially and/or radially supported in relation to a fixed assembly, preferably a transmission housing.

14. Multi-clutch arrangement according to any one of Claims 1 to 13, **characterized in that** an input area (84) of the torsional vibration damper arrangement (80) is axially and/or radially supported by way of a bearing arrangement (102) on an output area (18, 46) of the torsional vibration damper arrangement (80).

15. Multi-clutch arrangement according to any one of Claims 1 to 14, **characterized in that** the torsional vibration damper arrangement (80) has a frictional damping device (104).

16. Multi-clutch arrangement according to Claim 15, **characterized in that** the frictional device (218) is arranged radially outside a damper element arrangement (128) of the torsional vibration damper arrangement (120).

17. Multi-clutch arrangement according to any one of Claims 1 to 16, **characterized in that** the torsional vibration damper arrangement (120) has a primary side (208) to be coupled to a drive member and a secondary side (212) connected to the counter-bearing arrangement (18) of the multiple clutch arrangement (10), said secondary side being coupled to the primary side (208) by way of a damper element arrangement (128) for the transmission of torque.

18. Multi-clutch arrangement according to Claim 17, **characterized in that** in some areas the secondary side (212) and/or the damper element arrangement (128) overlap with the contact pressure plate arrangement (16) and/or the counter-bearing arrangement (18'') of one (12) of the clutch areas (12, 14).

19. Multi-clutch arrangement according to Claim 18, **characterized in that** the damper element arrangement (128) is substantially arranged radially inside the contact pressure plate arrangement (16) and/or the counter-bearing arrangement (18") of the one clutch area (12).

20. Multi-clutch arrangement according to any one of Claims 17 to 19, **characterized in that** the secondary side (212) of the torsional vibration damper arrangement (120) is axially flexibly connected to the counter-bearing arrangement (18).

21. Multi-clutch arrangement according to any one of Claims 17 to 20, **characterized in that** the multiple clutch arrangement (10) is supported, at least axially, in relation to the drive member by way of the secondary side (212) of the torsional vibration damper arrangement (120).

## Revendications

1. Dispositif à embrayage multiple, notamment double embrayage pour véhicule automobile, comprenant :
- une première zone d'embrayage (12) avec un premier dispositif de plateau de pression (16), un premier dispositif de butée (18) et un premier dispositif de disque d'embrayage (28) pouvant être serré pour le transfert de couple par le biais de la première zone d'embrayage (12) entre le premier dispositif de plateau de pression (16) et le premier dispositif de butée (18),
- une deuxième zone d'embrayage (14) avec un deuxième dispositif de plateau de pression (44), un deuxième dispositif de butée (46) et un deuxième dispositif de disque d'embrayage (56) pouvant être serré pour le transfert de couple par le biais de la deuxième zone d'embrayage (14) entre le deuxième dispositif de plateau de pression (44) et le deuxième dispositif de butée (46), et
dans lequel un dispositif d'amortissement des oscillations (80) est associé à au moins l'une des zones d'embrayage (12, 14), et dans lequel le dispositif d'amortissement des oscillations (80) - par rapport à un axe de rotation (A) - est disposé au moins partiellement dans la région axiale de la première zone d'embrayage (12) et/ou de la deuxième zone d'embrayage (14),
**caractérisé en ce que**
le dispositif d'amortissement des oscillations (80) comprend un élément de disque central (84) et de part et d'autre de celui-ci un élément de disque de recouvrement respectif (18, 46), les éléments de disque de recouvrement étant connectés fixement les uns aux autres et étant accouplés à l'élément de disque central (84) par le biais d'un dispositif d'élément amortisseur (92) en vue du transfert de couple, et dans lequel au moins l'un des éléments de disque de recouvrement (18, 46) forme au moins une partie du dispositif de butée (18, 46) de l'une des zones d'embrayage (12, 14).

2. Dispositif à embrayage multiple selon la revendication 1,
**caractérisé en ce qu'**au moins l'un des dispositifs de butée (18, 46) forme une partie du dispositif d'amortissement des oscillations (80).

3. Dispositif à embrayage multiple selon la revendication 1,
**caractérisé en ce que** les deux zones d'embrayage (12, 14) sont positionnées avec leurs dispositifs de butée (18, 46) tournés l'un vers l'autre, et **en ce que** chacun des dispositifs de butée (18, 46) forme à chaque fois au moins en partie l'un des éléments de disque de recouvrement (18, 46).

4. Dispositif à embrayage multiple selon la revendication 1 ou 3,
**caractérisé en ce que** les éléments de disque de recouvrement (18, 46) présentent des zones de support (96, 100) pour l'interaction avec le dispositif d'élément amortisseur (92), et **en ce que** dans l'au moins un des éléments de disque de recouvrement (18, 46), les zones de support (96, 100) sont prévues radialement à l'intérieur d'une zone de surface de frottement (22, 50) prévue pour l'application frottante d'un dispositif de disque d'embrayage (28, 56) sur l'élément de disque de recouvrement (18, 46).

5. Dispositif à embrayage multiple selon l'une quelconque des revendications 1, 3 ou 4,
**caractérisé en ce qu'**au moins l'un (16) des dispositifs de plateau de pression (16, 44) peut être sollicité pour mettre en oeuvre des opérations d'embrayage/débrayage par le biais d'organes de transfert de force d'actionnement (34) traversant l'élément de disque central (84), et **en ce qu'**au moins une partie des organes de transfert de force d'actionnement (34) prévoit, en coopération avec l'élément de disque central (84), une limitation de l'angle de rotation pour le dispositif d'amortissement des oscillations de torsion (80).

6. Dispositif à embrayage multiple selon la revendication 5,
**caractérisé en ce que** les organes de transfert de force d'actionnement (34) prévoyant en coopération avec l'élément de disque central (84) une limitation de l'angle de rotation pour le dispositif d'amortissement des oscillations de torsion (80) traversent le dispositif de butée (18) associé à l'au moins un dispositif de plateau de pression (16) essentiellement sans jeu de déplacement périphérique.

7. Dispositif à embrayage multiple selon l'une quelconque des revendications 1 à 6,
**caractérisé par** au moins un autre dispositif d'amortissement des oscillations de torsion (112, 114 ; 120).

8. Dispositif à embrayage multiple selon la revendication 7,
**caractérisé en ce que** l'au moins un autre dispositif d'amortissement des oscillations de torsion (112, 114 ; 120) est disposé en série par rapport au dispositif d'amortissement des oscillations de torsion (80) de manière à permettre un transfert de couple.

9. Dispositif à embrayage multiple selon la revendication 8,
**caractérisé en ce que** l'au moins un autre dispositif d'amortissement des oscillations de torsion (112, 114) est prévu dans la région d'un dispositif de disque d'embrayage (28, 56).

10. Dispositif à embrayage multiple selon la revendication 8 ou 9,
**caractérisé en ce que** l'au moins un autre dispositif d'amortissement des oscillations de torsion (120) est prévu du côté de l'entrée pour l'accouplement à un organe d'entraînement (82) et est accouplé du côté de la sortie à l'élément de disque central (84) du dispositif d'amortissement des oscillations de torsion (80).

11. Dispositif à embrayage multiple selon l'une quelconque des revendications 7 à 10, **caractérisé en ce que** l'au moins un autre dispositif d'amortissement des oscillations de torsion (120) est disposé parallèlement au dispositif d'amortissement des oscillations de torsion (80) de manière à permettre le transfert de couple.

12. Dispositif à embrayage multiple selon la revendication 11,
**caractérisé en ce que** l'au moins un autre dispositif d'amortissement des oscillations de torsion (120) est prévu du côté de l'entrée pour l'accouplement à un organe d'entraînement (82) et est accouplé en outre à une région d'entrée (84) du dispositif d'amortissement des oscillations de torsion (80) et du côté de la sortie avec une région de sortie (18, 46) du dispositif d'amortissement des oscillations de torsion (80).

13. Dispositif à embrayage multiple selon l'une quelconque des revendications 1 à 12,
**caractérisé en ce que** le dispositif d'embrayage (10) est supporté dans la région d'un dispositif de carter (40) de celui-ci par rapport à un modùle fixe, de préférence le carter de la boîte de vitesses, dans la direction axiale et/ou dans la direction radiale.

14. Dispositif à embrayage multiple selon l'une quelconque des revendications 1 à 13,
**caractérisé en ce qu'**une région d'entrée (84) du dispositif d'amortissement des oscillations de torsion (80) est supportée par le biais d'un dispositif de palier (102) au niveau d'une région de sortie (18, 46) du dispositif d'amortissement des oscillations de torsion (80) dans la direction axiale et/ou dans la direction radiale.

15. Dispositif à embrayage multiple selon l'une quelconque des revendications 1 à 14,
**caractérisé en ce que** le dispositif d'amortissement des oscillations de torsion (80) présente un dispositif d'amortissement de frottement (104).

16. Dispositif à embrayage multiple selon la revendication 15,
**caractérisé en ce que** le dispositif de frottement (218) est disposé radialement en dehors d'un dispositif d'élément amortisseur (128) du dispositif d'amortissement des oscillations de torsion (120).

17. Dispositif à embrayage multiple selon l'une quelconque des revendications 1 à 16,
**caractérisé en ce que** le dispositif d'amortissement des oscillations de torsion (120) présente un côté primaire (208) devant être accouplé à un organe d'entraînement et un côté secondaire (212) connecté au dispositif de butée (18) du dispositif à embrayage multiple (10), lequel est accouplé par le biais d'un dispositif d'élément amortisseur (128) au côté primaire (208) en vue du transfert de couple.

18. Dispositif à embrayage multiple selon la revendication 17,
**caractérisé en ce que** le côté secondaire (212) et/ou le dispositif d'élément amortisseur (128) chevauche par portion le dispositif de plateau de pression (16) et/ou le dispositif de butée (18") de l'une (12) des zones d'embrayage (12, 14).

19. Dispositif à embrayage multiple selon la revendication 18,
**caractérisé en ce que** le dispositif d'élément amortisseur (128) est disposé essentiellement radialement à l'intérieur du dispositif de plateau de pression (16) et/ou du dispositif de butée (18") de l'une (12) des zones d'embrayage.

20. Dispositif à embrayage multiple selon l'une quelconque des revendications 17 à 19,
**caractérisé en ce que** le côté secondaire (212) du dispositif d'amortissement des oscillations de torsion (120) est connecté axialement élastiquement au dispositif de butée (18).

21. Dispositif à embrayage multiple selon l'une quelconque des revendications 17 à 20,
**caractérisé en ce que** le dispositif d'embrayage multiple (10) est supporté par le biais du côté secondaire (212) du dispositif d'amortissement des oscillations de torsion (120) au moins axialement par rapport à l'organe d'entraînement.
